# EUROPÄISCHE PATENTSCHRIFT

(11) **EP 4 508 340 B1**
(45) Veröffentlichungstag und Bekanntmachung des Hinweises auf die Patenterteilung: **10.12.2025**
(21) Anmeldenummer: 23715833.2
(22) Anmeldetag: 29.03.2023
(51) Int. Cl.: F16B 37/04, F16B 5/01, F16B 2/04, F16B 43/00

(54) **BEFESTIGER**
FASTENER
FIXATION

(30) Priorität: 12.04.2022 DE 102022108903; 09.01.2023 DE 102023100303
(43) Veröffentlichungstag der Anmeldung: 19.02.2025
(73) Patentinhaber: fischerwerke GmbH & Co. KG, 72178 Waldachtal (DE)
(72) Erfinder: BREUER, Harald, 72270 Baiersbronn (DE); LEHMANN, Joachim, 72280 Dornstetten (DE); ZIMMERMANN, Jan, 72160 Horb a. N. (DE)
(86) Internationale Anmeldenummer: PCT/EP2023/058078
(87) Internationale Veröffentlichungsnummer: WO 2023/198449

(56) Entgegenhaltungen:
- WO-A1-2018/218024
- DE-A1- 1 961 489
- DE-A1- 3 042 432
- DE-T2- 69 616 818

## Beschreibung

Die Erfindung betrifft einen Befestiger zu einer Befestigung in einer Vertiefung eines Bauteils mit den Merkmalen des Oberbegriffs des Anspruchs 1 und eine Befestigungsanordnung mit einem solchen Befestiger mit den Merkmalen des Oberbegriffs des Anspruchs 12. Der Befestiger ist insbesondere zur Befestigung in einer niedrigen, kreisförmigen Vertiefung in beispielsweise einer dünnen Platte, insbesondere einer Aluminiumverbundplatte mit einem mineralischen Kern, vorgesehen.

Die Offenlegungsschrift DE 1 961 489 A1 offenbart einen Befestiger mit einer Kralle, die die Form einer Lochscheibe mit einem kegelstumpfförmigen, umlaufenden und durch Schlitze in Segmente unterteilten Außenrand aufweist. Zu einer Befestigung wird der Außenrand der Kralle in eine kreisförmige und schräge, das heißt ebenfalls kegelstumpfförmigen Ringnut in beispielsweise einer Platte eingebracht derart, dass der kegelstumpfförmige, umlaufende Außenrand der Kralle die ebenfalls kegelstumpfförmige Ringnut in der Platte untergreift, beziehungsweise hintergreift.

Aufgabe der Erfindung ist, einen Befestiger mit einer aufspreizbaren Kralle und eine Befestigungsanordnung mit einem solchen Befestiger vorzuschlagen.

Diese Aufgabe wird erfindungsgemäß durch die Merkmale der Ansprüche 1 und 12 gelöst. Die abhängigen Ansprüche haben vorteilhafte Ausgestaltungen und Weiterbildungen der Erfindung zum Gegenstand. Der erfindungsgemäße Befestiger weist eine Spannachse, eine glockenförmige Kralle, einen Spanner auf einer Außenseite der Kralle und ein Widerlager an einer Innenseite der Kralle auf. Mit "glockenförmig" ist ein insbesondere plattenförmiger, kuppelartig 2-dimensional gewölbter Körper mit einem achsparallelen oder kegelstumpfförmigen und ringförmigen Abschnitt an einem Außenrand der Kralle gemeint, wobei der Abschnitt an dem Außenrand in axialer Richtung gewölbt sein kann. Die Kralle kann sowohl in axialer als auch in radialer Richtung gerundet oder eckig sein. Eine konvexe Seite wird hier als Außenseite und eine konkave Seite als Innenseite der Kralle bezeichnet, wobei "konvex" und "konkav" sich sowohl auf eine gerundete als auch auf eine eckige Form der Kralle beziehen.

Das Widerlager befindet sich an oder in der konkaven Innenseite der Kralle und in radialer Richtung zur Spannachse zwischen dem Außenrand der Kralle und der Spannachse.

Der Spanner befindet sich auf der dem Widerlager gegenüberliegenden konvexen Außenseite der Kralle und ist zum Aufspreizen der Kralle axial oder parallel zur Spannachse in Richtung des Widerlagers bewegbar, wobei der Spanner die Kralle, ausgehend von einem unverspannten Zustand, axial gesehen zwischen der Spannachse und dem Widerlager beaufschlagt. Mit dem Spanner lässt sich die Kralle radial innerhalb des Widerlagers in Richtung des Widerlagers beaufschlagen, wobei die Kralle gegen das Widerlager gedrückt wird, wodurch die Kralle um eine die Spannachse umschließende, ringförmige Schwenklinie schwenkt. Die Schwenklinie wird von dem Widerlager definiert beziehungsweise gebildet. Sie kann kreisförmig, nicht kreisförmig rund, beispielsweise elliptisch oder oval, oder eckig sein. Das Schwenken der glockenförmigen Kralle bei ihrer Beaufschlagung mit dem Spanner gegen das Widerlager kann auch als ein Schwenken um eine oder mehrere zu der Spannachse tangentiale Schwenkachse/n an verschiedenen Stellen auf einem Umfang um die Schwenkachse herum aufgefasst werden. "Tangential" bedeutet eine Gerade in einer Radialebene der Spannachse und in einem radialen Abstand von der Spannachse. Durch die Schwenkbewegung wird die Kralle des erfindungsgemäßen Befestigers aufgespreizt, das heißt der Außenrand der Kralle vergrößert seinen radialen Abstand von der Spannachse.

Vorzugsweise sind die Kralle, der Spanner und das Widerlager koaxial zu der Spannachse.

Zu einer Befestigung an einem Bauteil, beispielsweise an einer Platte wird der Außenrand der Kralle des erfindungsgemäßen Befestigers in eine Vertiefung, beispielsweise eine Ringnut oder eine, insbesondere zylindrische, Senkung in dem Bauteil eingebracht und die Kralle aufgespreizt. Durch das Aufspreizen der Kralle wird der Außenrand der Kralle radial nach außen und dadurch von innen gegen eine Umfangswand der Vertiefung in dem Bauteil gedrückt und auf diese Weise die Kralle durch Kraftschluss und/oder Formschluss in der Vertiefung in dem Bauteil festgelegt. In Abhängigkeit von einer Festigkeit des Bauteils an der Umfangswand der Vertiefung kann sich der Außenrand der Kralle in die Umfangswand einformen, wodurch zusätzlich ein Formschluss der Kralle in der Vertiefung des Bauteils erzielt wird.

Ein Vorteil der Erfindung ist die Möglichkeit einer Befestigung in einer axial niedrigen Vertiefung, beispielsweise in einer Ringnut oder in einer zylindrischen Senkung, und damit eine Befestigung an einem dünnen Bauteil, beispielsweise einer Platte. Besonders geeignet ist der erfindungsgemäße Befestiger für eine Platte oder allgemein ein Bauteil mit einer stabilen Deckschicht und einem Kern oder dergleichen mit niedrigerer mechanischer Festigkeit unter oder hinter der Deckschicht, in den der Außenrand der Kralle beim Aufspreizen eindringen kann, so dass er die stabile Deckschicht des Bauteils untergreift, beziehungsweise hintergreift. Insbesondere handelt es sich bei dem Bauteil um eine Verbundplatte bestehend aus 0,5 mm dicken Deckschichten aus Aluminium und einem 3 mm dicken mineralischen Kern, welcher zwischen den Deckschichten angeordnet ist. Der Befestiger ist jedoch nicht auf derartige Verbundplatten beschränkt.

Beim Aufspreizen der Kralle des erfindungsgemäßen Befestigers kann sich der Außenrand der Kralle ausschließlich oder im Wesentlichen ausschließlich radial zur Spannachse bewegen. Vorzugsweise wird die Kralle des erfindungsgemäßen Befestigers beim Aufspreizen axial flacher derart, dass der Außenrand der Kralle nicht nur seinen radialen Abstand von der Spannachse vergrößert, sondern sich auch axial in Richtung des Spanners bewegt. Dadurch "zieht" die Kralle mit ihrem Außenrand ihren mittleren Bereich radial innerhalb ihres Außenrandes, den Spanner und das Widerlager in Richtung des Bauteils, das heißt der Befestiger wird beim Aufspreizen bei dieser bevorzugten Ausführung der Erfindung sozusagen in Richtung oder gegen das Bauteil, an dem er befestigt wird, gespannt.

In bevorzugter Ausgestaltung der Erfindung steht die glockenförmige Kralle axial nicht mehr als 3 mm und insbesondere nicht mehr als 2 mm in Richtung von dem Spanner weg über das Widerlager über. Dadurch wird ein axial "niedriger" Befestiger möglich, der nur wenig von dem Bauteil, an dem er festgelegt ist oder wird, absteht.

Vorzugsweise weist der erfindungsgemäße Befestiger ein ringförmiges Widerlager auf, das die Spannachse umschließt. Das Widerlager kann kreisrund oder anders als kreisförmig rund und/oder eckig sein. Vorzugsweise jedoch nicht zwingend umschließt das Widerlager die Spannachse konzentrisch. Beim Aufspreizen schwenkt die Kralle bei dieser bevorzugten Ausgestaltung der Erfindung um eine ringförmige Schwenklinie, die die Spannachse umschließt und die das Widerlager definiert. Die Schwenkbewegung ist zweidimensional und vergrößert den radialen Abstand des Außenrandes der Kralle von der Spannachse.

Bei einer Ausgestaltung der Erfindung weist der Befestiger einen Gewindeschaft auf, der durch ein Loch, insbesondere durch ein Mittelloch in der Kralle hindurch geht und der die Spannachse definiert. Der Gewindeschaft kann beispielsweise ein Schraubenschaft, ein Gewindebolzen oder ein Gewindeschaft des Widerlagers sein. Er ermöglicht durch eine Schraubbewegung des Spanners auf dem Gewindeschaft eine Axialbewegung des Spanners in der Spannrichtung, die in Richtung des Widerlagers gerichtet ist. Die Axialbewegung des Spanners beaufschlagt die Kralle gegen das Widerlager und bewirkt dadurch das Aufspreizen der Kralle.

Der Spanner ist insbesondere durch eine Mutter und einer Art Unterlegscheibe gebildet, wobei die Unterlegscheibe axial durch Drehung der Mutter auf dem Gewindeschaft in Spannrichtung gegen die Kralle beaufschlagt wird und es dadurch, wie beschrieben, zum Aufspreizen der Kralle kommt. An der Unterlegscheibe kann ein elastisches Dichtelement angeordnet sein, welches insbesondere an einem Außenumfang der Unterlegscheibe angeordnet ist und insbesondere in Spannrichtung derart weit über die Unterlegscheibe übersteht, respektive sich in Richtung der Kralle erstreckt, dass bei verwendungsgemäßem Gebrauch des Befestigers, wenn sich dieser in einer Vertiefung eines zu befestigenden Bauteils und sich die Kralle in einem aufgespreizten Zustand befindet, das Dichtelement eine dichtende Wirkung zwischen dem Bauteil und der Vertiefung im Bauteil entfaltet. Anders formuliert ist das Dichtelement derart ausgebildet, dass ein Eintritt von Feuchtigkeit in die Vertiefung des Bauteils verhindert oder zumindest stark unterdrückt wird, wenn der Befestiger in der Vertiefung angeordnet und die Kralle aufgespreizt ist.

Vorzugsweise ist der Gewindeschaft drehfest und zugfest mit dem Widerlager, insbesondere ist der Gewindeschaft einstückiger Bestandteil des Widerlagers oder jedenfalls starr mit dem Widerlager verbunden. Beispielsweise ist das Widerlager ein scheibenförmiger Schraubenkopf oder wird von einem scheibenförmigen Schraubenkopf einer Schraube gebildet, deren Schraubenschaft den Gewindeschaft bildet.

Eine Ausgestaltung der Erfindung sieht Schlitze in der Kralle vor, die von dem Außenrand der Kralle über das Widerlager hinweg nach innen in Richtung der Spannachse verlaufen und in einem Abstand von der Spannachse enden. Sofern die Kralle ein Loch oder Mittelloch aufweist, enden die Schlitze der Kralle außerhalb des Lochs oder Mittellochs der Kralle. Die Schlitze unterteilen die Kralle in Spreizsegmente, was das Aufspreizen der Kralle erleichtert. Bei dieser Ausgestaltung der Erfindung ist eine Spreizkraft, mit der die Spreizsegmente radial nach außen gespreizt werden, im Verhältnis zu einer Spannkraft, mit der der Spanner die Kralle axial gegen das Widerlager beaufschlagt, erhöht.

In einer weiteren Ausgestaltung der Erfindung sind an dem Außenrand der Kralle Schneidelemente ausgebildet. Insbesondere sind an dem Außenrand jedes Spreizelements ein oder mehrere Schneidelemente ausgebildet. Durch die Schneidelemente ist ein Eindringen des Außenrands der Kralle in die Umfangswand der Vertiefung des Bauteils beim Aufspreizen der Kralle erleichtert. Anders formuliert ermöglichen die Schneidelemente eine Reduzierung der Kraft, die notwendig ist, um die Kralle in die Umfangswand einzupressen. Auch ist generell der Halt des Befestigers in dem Bauteil hierdurch verbessert. Unter "Schneidelemente" sind solche Elemente zu verstehen, die ein Eindringen des Außenrands der Kralle in die Umfangswand erleichtern. Diese können beispielsweise als Schneiden, Rändel, Zacken oder ähnliche Strukturen ausgebildet sein.

Zur Bildung des Widerlagers sieht eine Ausgestaltung der Erfindung eine Widerlagerplatte vor, deren Umfangsrand beziehungsweise eine umlaufende Kante an einem Übergang von einem Umfang zu einer der Kralle zugewandten Stirnseite der Widerlagerplatte das Widerlager bildet. Der das Widerlager bildende Übergang vom Umfang zur Stirnseite der Widerlagerplatte kann auch gerundet sein oder eine Fase aufweisen. Die Widerlagerplatte kann beispielsweise kreisrund, anders als kreisförmig rund oder eckig sein.

Eine Weiterbildung der Erfindung sieht eine ebene Stirnseite der Widerlagerplatte auf einer der Kralle zugewandten Seite vor. Eine andere Ausgestaltung der Erfindung, die auch zusammen mit der ebenen Stirnseite der Widerlagerplatte verwirklicht sein kann, sieht eine ebene Stirnseite des Spanners auf der der Kralle zugewandten Seite vor. Die Kombination beider Möglichkeiten ermöglicht ein ebenes Einspannen der Kralle zwischen dem Spanner und der Widerlagerplatte.

Eine der Kralle abgewandte Stirnseite des Spanners ist bei einer Ausgestaltung der Erfindung als Anlagefläche für ein Anbauteil ebenfalls eben.

Ebenso sieht eine Ausgestaltung der Erfindung eine ebene oder konkave Stirnseite der Widerlagerplatte auf einer der Kralle abgewandten Seite als Anlagefläche beziehungsweise zur Bildung einer ringförmigen Anlage für das Bauteil vor.

Gegenstand der erfindungsgemäßen Befestigungsanordnung mit den Merkmalen des Anspruchs 12 ist ein Bauteil, insbesondere eine zuvor erläuterte Aluminiumverbundplatte mit einem Kern, insbesondere einem mineralischen Kern,, mit einer Vertiefung, die eine Umfangswand aufweist, und der vorstehend erläuterte Befestiger, dessen Kralle in der Vertiefung des Bauteils aufgespreizt ist derart, dass der Außenrand der Kralle von innen gegen die Umfangswand der Vertiefung drückt und vorzugsweise in die Umfangswand der Vertiefung eingedrückt ist. Der von innen gegen die Umfangswand der Vertiefung gedrückte Außenrand der Kralle hält den Befestiger durch Kraftschluss (=Reibschluss) in der Vertiefung. Zusätzlich besteht ein Formschluss, wenn der Außenrand der Kralle in die Umfangswand der Vertiefung des Bauteils gedrückt ist. Die Vertiefung in dem Bauteil ist beispielsweise eine Ringnut, deren äußere Nutwange die Umfangswand der Vertiefung bildet, oder eine insbesondere zylindrische Senkung. Die Vertiefung, die Ringnut oder die Senkung können kreisförmig, anders als kreisförmig rund oder eckig sein. Die Aufzählung ist beispielhaft und nicht abschließend. In einem verspreizten Zustand des Befestigers in dem Bauteil ist die Widerlagerplatte insbesondere in flächigem Kontakt mit einer Deckschicht des Bauteils, also insbesondere der Deckschicht aus Aluminium. Durch den Spanner wird die Widerlagerplatte im verspreizten Zustand des Befestigers gegen die Deckschicht gepresst. Es ist jedoch auch möglich, dass die Widerlagerplatte innerhalb der Vertiefung, insbesondere innerhalb der zylindrischen Senkung und unterhalb der Deckschicht, also innerhalb des Kerns, angeordnet ist. Insbesondere ist der Durchmesser der Unterlegscheibe des Spanners bezüglich der Spannachse größer als der Durchmesser der zylindrischen Senkung, wodurch die Unterlegscheibe im verspannten Zustand insbesondere in Anlage zu der Deckschicht ist, respektive mit der Deckschicht verspannt ist. Wie bereits geschrieben kann die Unterlegscheibe ein Dichtelement aufweisen, welches im verspannten Zustand in Anlage mit der Deckschicht ist und somit einen Eintritt von Feuchtigkeit in die Vertiefung des Bauteils verhindert.

Das Bauteil ist bei einer Ausgestaltung der Erfindung eine dünne Platte, die nicht dicker als 5 Millimeter ist. Die Vertiefung ist bei Ausgestaltungen der Erfindung mindestens halb so tief wie die Platte dick ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale der Ausführungsbeispiele, sondern einen grundsätzlich beliebigen Teil der gekennzeichneten Merkmale des Ausführungsbeispiels oder der Ausführungsbeispiele aufweisen, sind möglich.

Die Erfindung wird nachfolgend anhand zweier in den Zeichnungen dargestellter Ausführungsbeispiele näher erläutert. Es zeigen:
- Figur 1: einen Achsschnitt eines erfindungsgemäßen Befestigers in einem nicht aufgespreizten Zustand in einem Bauteil in einer ersten Befestigungskonfiguration eines ersten Ausführungsbeispiels;
- Figur 2: den Befestiger aus Figur 1 in aufgespreiztem Zustand in dem Bauteil;
- Figur 3: den erfindungsgemäßen Befestiger der Figur 1 in einem nicht aufgespreizten Zustand in dem Bauteil der Figur 1 in einer zweiten Befestigungskonfiguration eines zweiten Ausführungsbeispiels; und
- Figur 4: die Befestigungskonfiguration der Figur 3 in aufgespreiztem Zustand.

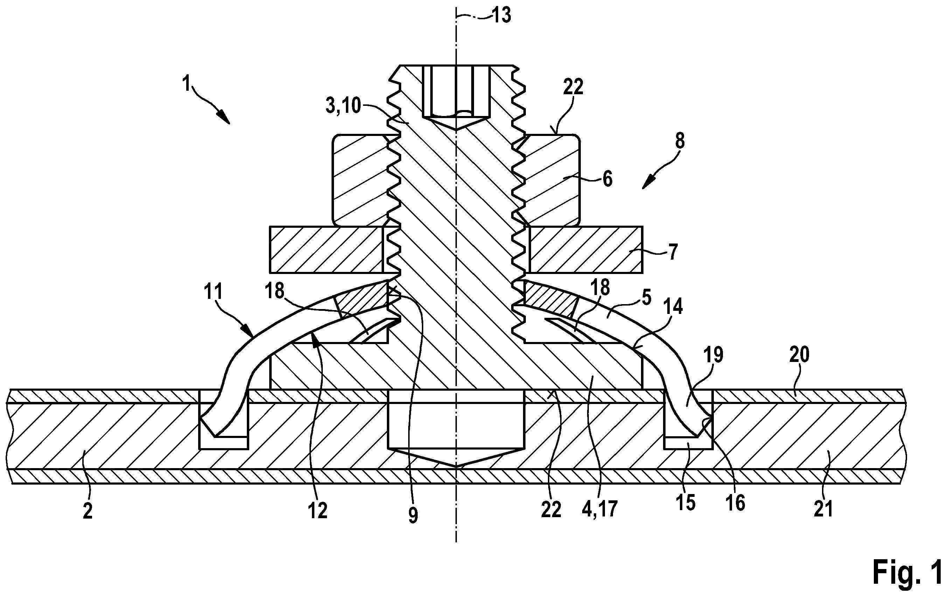

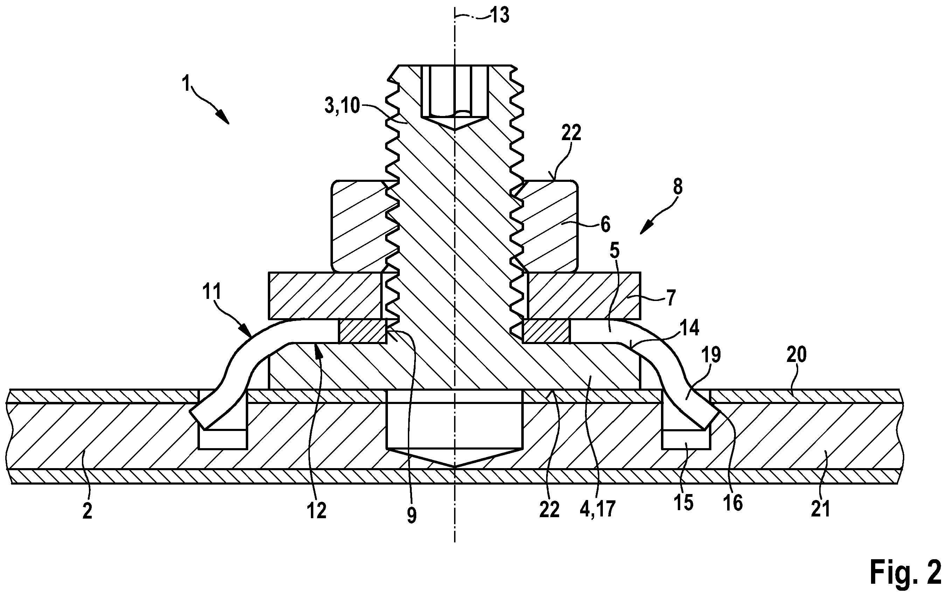

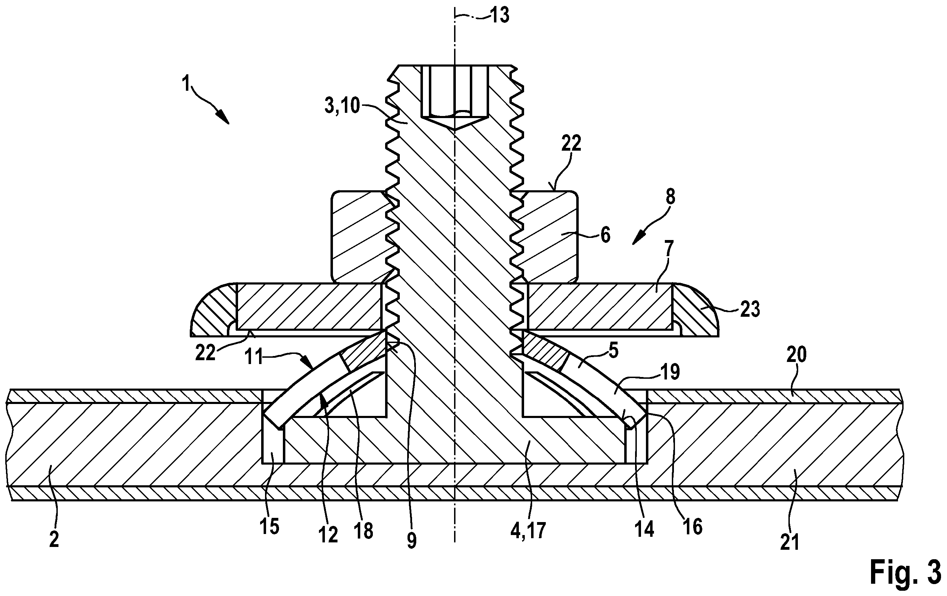

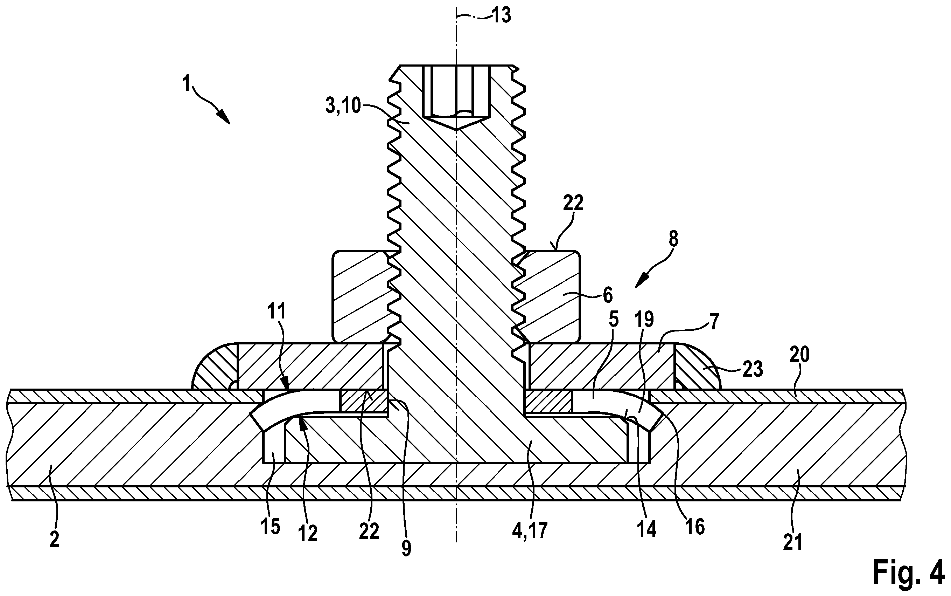

Der in der Zeichnung dargestellte, erfindungsgemäße Befestiger 1 ist zu einer Befestigung an einer dünnen Platte beziehungsweise zu einer Befestigung der dünnen Platte an beispielsweise einer nicht dargestellten Fassade mit Hilfe des Befestigers 1 vorgesehen. Die Platte wird hier nachfolgend allgemein als Bauteil 2 bezeichnet werden. Im Folgenden werden für beide Ausführungsbeispiele aus Gründen der Übersichtlichkeit dieselben Bezugszeichen verwendet und lediglich die Unterschiede benannt. Eine erste Befestigungskonfiguration ist in den Figuren 1 und 2 als ein erstes Ausführungsbeispiel und eine zweite Befestigungskonfiguration ist in den Figuren 3 und 4 als ein zweites Ausführungsbeispiel dargestellt.

Der Befestiger 1 weist eine Schraube 3 mit einem kreisscheibenförmigen Schraubenkopf 4, eine glockenförmige Kralle 5 und eine Mutter 6 mit einer Unterlegscheibe 7 als Spanner 8 auf.

Die Kralle 5 weist die Form einer zweidimensional gewölbten Kuppel auf, die hier als glockenförmig bezeichnet wird. Mit "glockenförmig" ist ein hohler Rotationskörper beziehungsweise eine Schale eines Rotationskörpers gemeint, dessen erzeugende Kurve ein Bogen beziehungsweise eine in einer Richtung gewölbte Linie ist. Möglich ist auch ein Geradenzug als Erzeugende des Rotationskörpers (nicht dargestellt). Im Ausführungsbeispiel weist die Linie, die den die Kralle 5 bildenden Rotationskörper beziehungsweise die Glockenform der Kralle 5 erzeugt, nahe ihrem äußeren Ende eine Abwinklung oder Biegung in einer der übrigen erzeugenden Linie entgegengesetzten Richtung auf. Das heißt die glockenförmige Kralle 5 weist - im Ausführungsbeispiel - einen ringförmigen Abschnitt an ihrem Außenrand 16 mit einer Wölbung auf, die einer Wölbung der Kralle 5 innerhalb des ringförmigen Abschnitts am Außenrand 16 der Kralle 5 entgegengesetzt ist. An dem Außenrand 16 der Kralle 5 sind Schneidelemente angeordnet (nicht dargestellt).

Eine konvexe Seite der Kralle 5 wird hier nachfolgend als Außenseite 11 und eine konkave Seite der Kralle 5 als Innenseite 12 bezeichnet werden.

Die Kralle 5 weist ein Mittelloch 9 auf, durch das ein Schraubenschaft der Schraube 3 koaxial hindurch geht, der hier nachfolgend verallgemeinernd als Gewindeschaft 10 bezeichnet werden wird. Der kreisscheibenförmige Schraubenkopf 4 befindet sich auf oder in der Innenseite 12 der Kralle 5. Die Mutter 6 ist auf der Außenseite 11 der Kralle 5 auf den Schraubenschaft beziehungsweise Gewindeschaft 10 geschraubt und die Unterlegscheibe 7 ist zwischen der Mutter 6 und der Kralle 5 auf dem Gewindeschaft 10 angeordnet. Eine Achse des Gewindeschafts 10, zu der die Kralle 5 koaxial angeordnet ist, bildet eine Spannachse 13 des erfindungsgemäßen Befestigers 1.

Ein Umfang des Schraubenkopfs 4 beziehungsweise ein Übergang vom Umfang zu einer der Kralle 5 zugewandten Unterseite des Schraubenkopfs 4 bildet ein - im Ausführungsbeispiel kreisförmiges - Widerlager 14 für die Kralle 5. Der das Widerlager 14 bildende Übergang vom Umfang zur Unterseite des Schraubenkopfs 4 kann beispielsweise eine Kante oder eine Fase wie im Ausführungsbeispiel aufweisen oder beispielsweise gerundet sein.

Der kreisscheibenförmige Schraubenkopf 4 bildet eine Widerlagerplatte 17 mit dem ringförmigen Widerlager 14 an seinem Umfang. Der den Gewindeschaft 10 des Befestigers 1 bildende Schraubenschaft ist drehfest und zugfest, im Ausführungsbeispiel einstückig mit dem die Widerlagerplatte 17 bildenden Schraubenkopf 4.

Zur Befestigung des erfindungsgemäßen Befestigers 1 in der ersten Befestigungskonfiguration des ersten Ausführungsbeispiels, dargestellt in den Figuren 1 und 2, weist das Bauteil 2 eine kreisförmige Ringnut auf, die hier nachfolgend verallgemeinernd als Vertiefung 15 des Bauteils 2 oder im Bauteil 2 bezeichnet werden wird. Möglich ist beispielsweise auch eine kreisförmige Senkung als Vertiefung (nicht dargestellt). Die Kreisform ist nicht in jedem Fall zwingend, möglich ist beispielsweise auch eine mehreckige beziehungsweise vieleckige Vertiefung im Bauteil 2 (nicht dargestellt).

Zur Befestigung an dem Bauteil 2 wird der Außenrand 16 der Kralle 5 in die Vertiefung 15 des Bauteils 2 eingebracht und die Kralle 5 in noch zu beschreibender Weise aufgespreizt. Bei der Befestigung des Befestigers 1 an dem Bauteil 2 sind die konkave Innenseite 12 der glockenförmigen Kralle 5 und der Schraubenkopf 4 dem Bauteil 2 zugewandt. Der Schraubenkopf 4 befindet sich außerhalb des Bauteils 2 auf oder in der Innenseite 12 der Kralle 5 zwischen der Kralle 5 und dem Bauteil 2.

Zum Aufspreizen der Kralle 5 wird die Mutter 6, die zusammen mit der Unterlegscheibe 7 den Spanner 8 des erfindungsgemäßen Befestigers 1 bildet, auf dem Gewindeschaft 10 in Richtung der Kralle 5 geschraubt. Die axiale Bewegung des Spanners 8 in Richtung der Kralle 5 und in Richtung des Widerlagers 14 wird hier auch als Bewegung in einer Spannrichtung bezeichnet werden. Dabei beaufschlagt die Mutter 6 die Kralle 5 über die Unterlegscheibe 7 in Richtung einer der Kralle 5 zugewandten Stirnseite des Schraubenkopfs 4, die auch als Unterseite des Schraubenkopfs 4 bezeichnet werden kann. Beim beziehungsweise zum Aufspreizen beaufschlagt Mutter 6 beziehungsweise die Unterlegscheibe 7 die Kralle 5 in einem ringförmigen, das Mittelloch 9 und damit auch die Spannachse 13 umschließenden Bereich innerhalb des Widerlagers 14 in Richtung des das Widerlager 14 aufweisenden Schraubenkopfs 4, das heißt in der Spannrichtung.

Zum Aufspreizen wird die Kralle 5 zwischen dem Schraubenkopf 4 und dem Spanner 8 eingespannt und in der Spannrichtung, das heißt axial zur Spannachse 13 gegen das ringförmige Widerlager 14 gedrückt. Beim beziehungsweise zum Aufspreizen wird die glockenförmige Kralle 5 flacher gedrückt, das heißt ihre axiale Höhe und ihre Wölbung verkleinern sich. Die Kralle 5 schwenkt um das Widerlager 14, das die ringförmige, den Gewindeschaft 10 und die Spannachse 13 außerhalb des Mittellochs 9 der Kralle 5 umschließende Schwenklinie bildet. Durch das Schwenken um das Widerlager 14 beziehungsweise die ringförmige Schwenklinie bewegt sich der Außenrand 16 der Kralle 5 radial nach außen, er vergrößert seinen radialen Abstand von der Spannachse 13. Durch die Abflachung der glockenförmigen Kralle 5 beim Aufspreizen beziehungsweise durch das Schwenken um das ringförmige Widerlager 14 bewegt sich der Außenrand 16 der Kralle 5 nicht nur radial nach außen, sondern auch axial, das heißt parallel zur Spannachse 13 entgegen der Spannrichtung, das heißt in Richtung der Mutter 6 und der Unterlegscheibe 7, die zusammen den Spanner 8 bilden. Dabei bewegt die Kralle 5 den Schraubenkopf 4 in Richtung des Bauteils 2, an dem der Befestiger 2 durch das Aufspreizen seiner Kralle 5 in der Vertiefung 15 befestigt wird. Im Ausführungsbeispiel beaufschlagt beziehungsweise spannt die Kralle 5 beim Aufspreizen den Schraubenkopf 4 gegen das Bauteil 2.

Das Schwenken der Kralle 5 um das ringförmige Widerlager 14 beim Aufspreizen der Kralle 5 muss nicht ausschließlich eine rotatorische Schwenkbewegung sein, sondern kann zusätzlich auch eine translatorische Wälzbewegung der Kralle 5 auf dem ringförmigen Widerlager 14 aufweisen, insbesondere, wenn das Widerlager 14 - wie im Ausführungsbeispiel - eine Fase aufweist oder gerundet ist. Das heißt das ringförmige Widerlager 14 oder genauer die dem Widerlager 14 gebildete, ringförmige Schenklinie, an der die Kralle 5 auf dem Widerlager 14 aufliegt, kann ihren Radius während des Aufspreizens ändern, das Widerlager 14 "sich wandert" oder verlagert beim Aufspreizen radial.

Der - im Ausführungsbeispiel kreisscheibenförmige - Schraubenkopf 4, der die Widerlagerplatte 17 des erfindungsgemäßen Befestigers 1 bildet, ist im Ausführungsbeispiel eben und weist eine ebene Unterseite und eine ebene Oberseite auf. Die dem Bauteil 2 zugewandte ebene Oberseite der Widerlagerplatte 17 wird durch das Aufspreizen der Kralle 5 axial zur Spannachse 13 gegen das Bauteil 2 beaufschlagt beziehungsweise gespannt und stabilisiert den Befestiger 1 und insbesondere seinen Gewindeschaft 10 gegen ein Kippen aus seiner rechtwinklig von dem Bauteil 2 abstehenden Lage. Die an dem Bauteil 2 anliegende Oberseite des die Widerlagerplatte 17 bildenden Schraubenkopfs 4 bildet eine ebene Anlagefläche des Befestigers 1 in einer Radialebene zur Spannachse 13 zur Anlage an dem Bauteil 2. Die Unterseite und die Oberseite des Schraubenkopfs 4 sind - im Ausführungsbeispiel ebene - Stirnseiten der Widerlagerplatte 17.

Um die Kralle 5 mit geringerer Kraft aufspreizen zu können, weist sie Schlitze 18 auf, die sich von ihrem Außenrand 16 über das Widerlager 14 hinweg nach innen erstrecken. Im Ausführungsbeispiel verlaufen die Schlitze 18 radial, was allerdings nicht zwingend für die Erfindung ist. Ebenfalls müssen die Schlitze 18, abweichend vom Ausführungsbeispiel, nicht gerade sein. Die Schlitze 18 unterteilen die glockenförmige Kralle 5 in streifenförmige Spreizsegmente 19, die sich von innerhalb des Widerlagers 14 - im Ausführungsbeispiel radial - nach außen bis zum Außenrand 16 der Kralle 5 erstrecken. Die - im Ausführungsbeispiel streifenförmigen - Spreizsegmente 19 schwenken beim Aufspreizen der Kralle 5 wie oben beschrieben um das kreisförmige Widerlager 14, wobei durch das Schwenken äußere Enden der Spreizsegmente 19 sich radial nach außen und zugleich axial in Richtung des Spanners 8 bewegen. Durch letztere Bewegung spannt die Kralle 5 beim Aufspreizen den Schraubenkopf 4 mit seiner Oberseite, die die ebene Anlagefläche des Befestigers 1 bildet, gegen das Bauteil 2.

Beim Aufspreizen schwenken die Spreizsegmente 19 der Kralle 5 um das kreisförmige Widerlager 14, was auch als Schwenken der Spreizsegmente 19 um zu dem kreisförmigen Widerlager tangentialen Schwenkachsen aufgefasst werden kann.

Die der Kralle 5 zugewandte Unterseite des die Widerlagerplatte 17 bildenden Schraubenkopfs 4 und die Unterlegscheibe 7, die Teil des Spanners 8 ist, sind eben. Dadurch lässt sich die Kralle 5 innerhalb des Widerlagers 14 flach drücken, das heißt ihre Wölbung verringern, bis die Kralle 5 innerhalb des Widerlagers 14 eben ist. Radial außerhalb des Widerlagers 14 bleibt die Kralle 5 zweidimensional gewölbt und bleiben die Spreizsegmente 19 gewölbt.

Der Außenrand 16 der glockenförmigen Kralle 5 steht im Ausführungsbeispiel um etwa 2 mm und nicht mehr als etwa 3 mm axial über die Oberseite des Schraubenkopfs 4 über. Dadurch benötigt der erfindungsgemäße Befestiger 1 nur eine niedrige Vertiefung 15 zu seiner Befestigung am Bauteil 2 und lässt sich an einem dünnen Bauteil 2, beispielsweise an einer Platte mit einer Dicke von beispielsweise nur 5 mm befestigen.

Weist die Platte beziehungsweise das Bauteil 2 eine feste Deckschicht 20 und einen Kern 21 oder dergleichen mit geringerer Festigkeit auf, formt sich der Außenrand 16 mit den daran ausgebildeten Schneidelementen der Kralle 5 beziehungsweise äußere Enden der Spreizsegmente 19 beim Aufspreizen der Kralle 5 in den Kern 21 oder dergleichen des Bauteils 2 ein und untergreifen beziehungsweise hintergreifen die stabilere Deckschicht 20. Dadurch wird ein Formschluss der Befestigung des Befestigers 1 in der Vertiefung 15 des Bauteils 2 zusätzlich zu eine Kraftschluss erreicht, der den Halt des Befestigers 1 am Bauteil 2 verbessert.

Die Mutter 6, die ein Teil des Spanners 8 ist, weist ebene, kreisringförmige Stirnflächen auf. Eine der Kralle 5 abgewandte Stirnfläche der Mutter 5 beziehungsweise des Spanners 8 bildet eine ebene Anlagefläche 22 für die nicht dargestellte Fassade oder dergleichen, an der die das Bauteil 2 bildende Platte mit Hilfe des erfindungsgemäßen Befestigers 1 befestigbar ist, oder eine Anlagefläche 22 für ein nicht dargestelltes Anbauteil oder dergleichen, das mit Hilfe des erfindungsgemäßen Befestigers 1 an dem Anbauteil oder dergleichen befestigbar ist.

Der durch das Aufspreizen seiner Kralle 5 in der Vertiefung 15 des Bauteils 2 befestigte Befestiger 1 bildet eine erfindungsgemäße Befestigungsanordnung.

In den Figuren 3 und 4 ist ein zweites Ausführungsbeispiel in Form einer zweiten Befestigungskonfiguration des Befestigers 1 an dem Bauteil 2 dargestellt. Die zweite Befestigungskonfiguration unterscheidet sich von der ersten Befestigungskonfiguration, die in den Figuren 1 und 2 dargestellt ist, im Wesentlichen dadurch, dass die Widerlagerplatte 17, respektive der Schraubenkopf 4, unterhalb der Deckschicht 20 und somit innerhalb des Kerns 21 angeordnet ist. Die Vertiefung 15 ist in dem zweiten Ausführungsbeispiel als zylindrische Senkung in dem Bauteil 2 ausgebildet. Die Unterlegscheibe 7 ist in der zweiten Befestigungskonfiguration derart dimensioniert, dass im verspreizten Zustand der Figur 4 die Unterlegscheibe 7 in Anlage zu der Deckschicht 20 tritt. Hierdurch wird der Befestiger 1 zusätzlich in dem Bauteil 2 stabilisiert und die Haltewerte erhöht. Zudem wird dadurch vermieden, dass die relativ weiche Deckschicht 20 aus Aluminium durch die Kralle 5 entgegen der Spannrichtung aufgewölbt, respektive aufgebogen wird. Die Unterlegscheibe 7 des Befestigers 1 weist in dem zweiten Ausführungsbeispiel ein Dichtelement 23 in Form einer umlaufenden Dichtung rund um die Unterlegscheibe 7 herum auf. Das Dichtelement 23 erstreckt sich in Richtung der Deckschicht 20 und ist im verspannten Zustand mit dieser in Kontakt, was in der Figur 4 dargestellt ist. Hierdurch kann keine Feuchtigkeit zwischen der Deckschicht 20 und der Unterlegscheibe 7 in die Vertiefung 15 eindringen. Zumindest wird ein Feuchtigkeitseintrag stark gehemmt. Zwischen der Mutter 6 und der Unterlegscheibe 7 kann ein insbesondere flächiges Anbauteil angeordnet sein (nicht dargestellt).
- 1: Befestiger
- 2: Bauteil
- 3: Schraube
- 4: Schraubenkopf
- 5: Kralle
- 6: Mutter
- 7: Unterlegscheibe
- 8: Spanner
- 9: Mittelloch
- 10: Gewindeschaft
- 11: Außenseite
- 12: Innenseite
- 13: Spannachse
- 14: Widerlager
- 15: Vertiefung
- 16: Außenrand
- 17: Widerlagerplatte
- 18: Schlitz
- 19: Spreizsegment
- 20: Deckschicht
- 21: Kern
- 22: Anlagefläche
- 23: Dichtelement

## Patentansprüche

1. Befestiger (1) zu einer Befestigung in einer Vertiefung (15) eines Bauteils (2), mit einer glockenförmigen Kralle (5) und mit einer Spannachse (13), die durch die Kralle (5) hindurch geht, **dadurch gekennzeichnet, dass** der Befestiger (1) einen Spanner (8) an einer Außenseite (11) der Kralle (5) und ein Widerlager (14) an einer Innenseite der Kralle (5) in einem radialen Abstand von der Spannachse (13) zwischen einem Außenrand (16) der Kralle (5) und der Spannachse (13) aufweist, und dass, ausgehend von einem unverspannten Zustand, die Kralle (5) mit dem Spanner (8) in einem kleineren radialen Abstand von der Spannachse (13) als dem radialen Abstand des Widerlagers (14) von der Spannachse (13) längs zur Spannachse (13) derart in einer Spannrichtung beaufschlagbar ist, dass die Kralle (5) gegen das Widerlager (14) gedrückt wird und dadurch um eine die Spannachse (13) umschließende oder um eine oder mehrere zu der Spannachse (13) tangentiale Schwenkachse/n am Widerlager (14) schwenkt, wodurch sich der Außenrand (16) der Kralle (5) radial von der Spannachse (13) entfernt.

2. Befestiger (1) nach Anspruch 1, **dadurch gekennzeichnet, dass** die Kralle (5) durch die Beaufschlagung mit dem Spanner (8) flacher wird.

3. Befestiger (1) nach Anspruch 1 oder 2, **dadurch gekennzeichnet, dass** die glockenförmige Kralle (5) axial nicht mehr als 3 mm und insbesondere nicht mehr als 2 mm über das Widerlager (14) übersteht.

4. Befestiger (1) nach einem oder mehreren der vorhergehenden Ansprüche, **dadurch gekennzeichnet, dass** der Befestiger (1) ein die Spannachse (13) umschließendes, ringförmiges Widerlager (14) auf einer Innenseite (12) der Kralle (5) aufweist.

5. Befestiger (1) nach einem oder mehreren der vorhergehenden Ansprüche, **dadurch gekennzeichnet, dass** die Kralle (5) ein die Spannachse (13) umschließendes Loch (9) aufweist, das ein Gewindeschaft (10) durchsetzt, der die Spannachse (13) definiert und eine Axialbewegung des Spanners (8) relativ zum Gewindeschaft (10) durch eine Schraubbewegung ermöglicht, derart, dass der Spanner (8) die Kralle (5) gegen das Widerlager (14) beaufschlagt.

6. Befestiger (1) nach einem oder mehreren der vorhergehenden Ansprüche, **dadurch gekennzeichnet, dass** die Kralle (5) Schlitze (18) in ihrem Außenrand (16) aufweist, die nach innen in Richtung der Spannachse (13) über das Widerlager (14) hinweg reichen und die Kralle (5) in Spreizsegmente (19) unterteilen.

7. Befestiger (1) nach einem oder mehreren der vorhergehenden Ansprüche, **dadurch gekennzeichnet, dass** der Befestiger (1) eine Widerlagerplatte (17) aufweist, deren Umfang das Widerlager (14) bildet.

8. Befestiger (1) nach Anspruch 7, **dadurch gekennzeichnet, dass** eine der Kralle (5) zugewandte Stirnseite der Widerlagerplatte (17) eben ist.

9. Befestiger (1) nach einem oder mehreren der vorhergehenden Ansprüche, **dadurch gekennzeichnet, dass** eine der Kralle (5) zugewandte Stirnseite des Spanners (8) eben ist.

10. Befestiger (1) nach einem oder mehreren der vorhergehenden Ansprüche, **dadurch gekennzeichnet, dass** eine der Kralle (5) abgewandte Stirnseite des Spanners (8) eben ist.

11. Befestiger (1) nach einem oder mehreren der vorhergehenden Ansprüche, **dadurch gekennzeichnet, dass** an dem Außenrand (16) der Kralle (5) Schneidelemente ausgebildet sind.

12. Befestigungsanordnung mit einem Befestiger (1) nach einem oder mehreren der vorhergehenden Ansprüche und mit einem eine Vertiefung (15) aufweisenden Bauteil (2), **dadurch gekennzeichnet, dass** die Vertiefung (15) eine Umfangswand aufweist und dass die Kralle (5) des Befestigers (1) in der Vertiefung (15) des Bauteils (2) durch Spannen der Kralle (5) mit dem Spanner (8) gegen das Widerlager (14) aufgespreizt ist, derart, dass Außenrand (16) der glockenförmigen Kralle (5) radial nach außen und gegen oder in die Umgangswand der Vertiefung (15) in dem Bauteil (2) gedrückt ist.

13. Befestigungsanordnung nach Anspruch 12, **dadurch gekennzeichnet, dass** das Bauteil (2) eine Deckschicht (20) aufweist, die dünner als die Vertiefung (15) tief ist, dass die Widerlagerplatte (17) bei in der Vertiefung (15) aufgespreizter Kralle (5) an einer Außenseite der Deckschicht (20) des Bauteils (1) flächig aufliegt oder innerhalb der Vertiefung (15) und unterhalb der Deckschicht (20) angeordnet ist und dass der Außenrand (16) der in der Vertiefung (15) aufgespreizten Kralle (5) die Deckschicht (20) hintergreift.

14. Befestigungsanordnung nach Anspruch 12 oder 13, **dadurch gekennzeichnet, dass** das Bauteil (2) eine dünne Platte und die Vertiefung (15) mindestens halb so tief wie die Platte dick ist.

15. Befestigungsanordnung nach einem oder mehreren der Ansprüche 12 bis 14, **dadurch gekennzeichnet, dass** die Vertiefung (15) eine kreisringförmige Nut oder eine zylindrische Senkung ist.

## Claims

1. A fastener (1) for fastening in a recess (15) of a component (2), comprising a bell-shaped claw (5) and comprising a tensioning axis (13) that passes through the claw (5), **characterized in that** the fastener (1) comprises a tensioner (8) on an outer side (11) of the claw (5) and a counter bearing (14) on an inner side of the claw (5) at a radial distance from the tensioning axis (13) between an outer edge (16) of the claw (5) and the tensioning axis (13), and **in that**, starting from an untensioned state, the claw (5) can be acted upon by the tensioner (8) in a tensioning direction at a smaller radial distance from the tensioning axis (13) than the radial distance of the counter bearing (14) from the tensioning axis (13) along the tensioning axis (13) in such a way that the claw (5) is pressed against the counter bearing (14) and thereby pivots about a pivot axis/es surrounding the tensioning axis (13) or about one or more pivot axis/es tangential to the tensioning axis (13) on the counter bearing (14), as a result of which the outer edge (16) of the claw (5) moves radially away from the tensioning axis (13).

2. The fastener (1) according to claim 1, **characterized in that** the claw (5) becomes flatter as a result of being acted upon by the tensioner (8).

3. The fastener (1) according to claim 1 or 2, **characterized in that** the bell-shaped claw (5) projects axially no more than 3 mm and in particular no more than 2 mm beyond the counter bearing (14).

4. The fastener (1) according to one or more of the preceding claims, **characterized in that** the fastener (1) comprises an annular counter bearing (14) surrounding the tensioning axis (13) on an inner side (12) of the claw (5).

5. The fastener (1) according to one or more of the preceding claims, **characterized in that** the claw (5) comprises a hole (9) surrounding the tensioning axis (13), through which a threaded shaft (10) passes, which defines the tensioning axis (13) and enables an axial movement of the tensioner (8) relative to the threaded shaft (10) by a screwing movement, in such a way that the tensioner (8) acts upon the claw (5) against the counter bearing (14).

6. The fastener (1) according to one or more of the preceding claims, **characterized in that** the claw (5) comprises slots (18) in its outer edge (16) which extend inwards in the direction of the tensioning axis (13) beyond the counter bearing (14) and divide the claw (5) into expansion segments (19).

7. The fastener (1) according to one or more of the preceding claims, **characterized in that** the fastener (1) comprises a counter bearing plate (17), the circumference of which forms the counter bearing (14).

8. The fastener (1) according to claim 7, **characterized in that** an end face of the counter bearing plate (17) facing the claw (5) is level.

9. The fastener (1) according to one or more of the preceding claims, **characterized in that** an end face of the tensioner (8) facing the claw (5) is level.

10. The fastener (1) according to one or more of the preceding claims, **characterized in that** an end face of the tensioner (8) facing away from the claw (5) is level.

11. The fastener (1) according to one or more of the preceding claims, **characterized in that** cutting elements are formed on the outer edge (16) of the claw (5).

12. A fastening arrangement with a fastener (1) according to one or more of the preceding claims and with a component (2) having a recess (15), **characterized in that** the recess (15) comprises a circumferential wall and **in that** the claw (5) of the fastener (1) is expanded in the recess (15) of the component (2) by tensioning the claw (5) with the tensioner (8) against the counter bearing (14) in such a way that the outer edge (16) of the bell-shaped claw (5) is pressed radially outwards and against or into the circumferential wall of the recess (15) in the component (2).

13. The fastening arrangement according to claim 12, **characterized in that** the component (2) comprises a cover layer (20) that is thinner than the recess (15) in depth, **in that**, when the claw (5) is expanded in the recess (15), the counter bearing plate (17) rests flat against an outer side of the cover layer (20) of the component (1) or is arranged inside the recess (15) and below the cover layer (20), and **in that** the outer edge (16) of the claw (5) expanded in the recess (15) engages behind the cover layer (20).

14. The fastening arrangement according to claim 12 or 13, **characterized in that** the component (2) is a thin plate and the recess (15) is at least half as deep as the thickness of the plate.

15. The fastening arrangement according to one or more of claims 12 to 14, **characterized in that** the recess (15) is an annular groove or a cylindrical countersink.

## Revendications

1. Dispositif de fixation (1) destiné à être fixé dans un renfoncement (15) d'un élément de construction (2), avec une griffe en forme de cloche (5) et avec un axe de serrage (13) qui traverse la griffe (5), **caractérisée en ce que** l'élément de fixation (1) **comporte** un dispositif de serrage (8) sur un côté extérieur (11) de la griffe (5) et une butée (14) sur un côté intérieur de la griffe (5) à une distance radiale de l'axe de serrage (13) entre un bord extérieur (16) de la griffe (5) et l'axe de serrage (13), et que, à partir d'un état non serré, la griffe (5) peut être sollicitée avec le tendeur (8) dans une direction de serrage le long de l'axe de serrage (13) à une distance radiale de l'axe de serrage (13) inférieure à la distance radiale de la butée (14) par rapport à l'axe de serrage (13), de telle sorte que la griffe (5) soit pressée contre la butée (14) et pivote ainsi autour d'un axe de pivotement entourant l'axe de serrage (13) ou autour d'un ou plusieurs axes de pivotement tangentiels à l'axe de serrage (13) au niveau de la butée (14), ce qui éloigne radialement le bord extérieur (16) de la griffe (5) de l'axe de serrage (13).

2. Dispositif de fixation (1) selon la revendication 1, **caractérisé en ce que** la griffe (5) s'aplatit sous l'action du tendeur (8).

3. Fixation (1) selon la revendication 1 ou 2, **caractérisée en ce que** la griffe en forme de cloche (5) ne dépasse pas axialement de plus de 3 mm et en particulier de plus de 2 mm au-delà de la butée (14).

4. Fixation (1) selon une ou plusieurs des revendications précédentes, **caractérisée en ce que** la fixation (1) présente une butée annulaire (14) entourant l'axe de serrage (13) sur une face intérieure (12) de la griffe (5).

5. Fixation (1) selon une ou plusieurs des revendications précédentes, **caractérisée en ce que** la griffe (5) présente un trou (9) entourant l'axe de serrage (13), traversé par une tige filetée (10) qui définit l'axe de serrage (13) de l' et permet un mouvement axial du tendeur (8) par rapport à la tige filetée (10) par un mouvement de vissage, de telle sorte que le tendeur (8) applique la griffe (5) contre la butée (14).

6. Élément de fixation (1) selon une ou plusieurs des revendications précédentes, **caractérisé en ce que** la griffe (5) présente des fentes (18) dans son bord extérieur (16), qui s'étendent vers l'intérieur en direction de l'axe de serrage (13) au-delà de la butée (14) et divisent la griffe (5) en segments d'écartement (19).

7. Fixation (1) selon une ou plusieurs des revendications précédentes, **caractérisée en ce que** la fixation (1) présente une plaque de butée (17) dont le pourtour forme la butée (14).

8. Fixation (1) selon la revendication 7, **caractérisée en ce qu'**un côté frontal de la plaque d'appui (17) tourné vers la griffe (5) est plat.

9. Fixation (1) selon une ou plusieurs des revendications précédentes, **caractérisée en ce qu'**une face frontale du tendeur (8) tournée vers la griffe (5) est plane.

10. Fixation (1) selon une ou plusieurs des revendications précédentes, **caractérisée en ce qu'**une face frontale du tendeur (8) opposée à la griffe (5) est plane.

11. Fixation (1) selon une ou plusieurs des revendications précédentes, **caractérisée en ce que** des éléments de coupe sont formés sur le bord extérieur (16) de la griffe (5).

12. Dispositif de fixation comprenant une attache (1) selon une ou plusieurs des revendications précédentes et un élément (2) présentant un renfoncement (15), **caractérisé en ce que** le renfoncement (15) présente une paroi périphérique et **en ce que** la griffe (5) de l'élément de fixation (1) est écartée dans le renfoncement (15) de l'élément (2) par serrage de la griffe (5) avec le tendeur (8) contre la butée (14), de telle sorte que le bord extérieur (16) de la griffe (5) en forme de cloche e est pressé radialement vers l'extérieur et contre ou dans la paroi périphérique du renfoncement (15) dans l'élément (2).

13. Dispositif de fixation selon la revendication 12, **caractérisé en ce que** l'élément (2) présente une couche de recouvrement (20) qui est plus mince que la profondeur du renfoncement (15), **en ce que** la plaque d'appui (17), lorsque la griffe (5) est écartée dans le renfoncement (15), appuie à plat sur une face extérieure de la couche de recouvrement (20) de l'élément (1) ou est disposée à l'intérieur du renfoncement (15) et sous la couche de recouvrement (20), et **en ce que** le bord extérieur (16) de la griffe (5) écartée dans le renfoncement (15) s'engage derrière la couche de recouvrement (20).

14. Dispositif de fixation selon la revendication 12 ou 13, **caractérisé en ce que** l'élément (2) est une plaque mince et que le renfoncement (15) a une profondeur au moins égale à la moitié de l'épaisseur de la plaque.

15. Dispositif de fixation selon une ou plusieurs des revendications 12 à 14, **caractérisé en ce que** le renfoncement (15) est une rainure circulaire ou un creux cylindrique.
